(19) Europäisches Patentamt
European Patent Office
Office européen des brevets

(11) **EP 2 242 227 A1**

(12) **EUROPEAN PATENT APPLICATION**

(43) Date of publication:
**20.10.2010 Bulletin 2010/42**

(51) Int Cl.:
*H04L 27/34* *(2006.01)*     *H04L 27/36* *(2006.01)*

(21) Application number: **09157946.6**

(22) Date of filing: **15.04.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(71) Applicant: **ST-Ericsson SA**
**1228 Plan-les-Ouates (CH)**

(72) Inventors:
• **Bode, Peter**
 **90419, Nuernberg (DE)**

• **Jacob, Hervé**
 **14280, Saint-Contest (FR)**
• **Ryter, Roland**
 **8608, Bubikon (CH)**

(74) Representative: **Zapalowicz, Francis**
 **Casalonga & Partners**
 **Bayerstrasse 71/73**
 **80335 München (DE)**

(54) **Method and device for processing a digital complex modulated signal within a polar modulation transmission chain.**

(57)     Method of processing a digital complex modulated signal, comprising performing pre-processing said digital complex modulated signal (DCMS) for obtaining a pre-processed digital complex modulated signal (PPRS) and performing a Cartesian to polar conversion of said pre-processed signal, said pre-processing (11) including analysing the trajectory of said digital complex modulated signal and if said trajectory crosses a region (RAO) around the origin (O) of the complex plane, modifying (112) said digital complex modulated signal such that said pre-processed signal has a modified trajectory avoiding said region.

## FIG.8

**Description**

The invention relates to digital signal processing and more particularly to the processing of a digital complex modulated signal within a polar modulation transmission chain.

A particular but non-limitative application of the invention is directed to the wireless communication field, in particular the UMTS and 3G standards.

New development of cellular and all radio communication systems is more and more requesting high performance and multimode equipments. As a consequence, in transmit side, a new architecture based on polar modulation, is proposed as an alternative to the well-known direct I and Q up-mixer transmission chain.

Advantages of such a transmit architecture based on polar modulation are the capability of high performance that allows multi-band RF sub-system without transmit passive filter, the robustness in front of the VCO re-modulation phenomenon that often limits the performance for the transmitted power in adjacent channels. Another benefit is the Large Signal Polar (LSP) circuitry, by which the recombination of amplitude and phase occurs inside the Power Amplifier (PA); the power efficiency is therefore maximized, that is useful for the systems of 2G and 2.5G generations that request often a large output power on the mobile phone. The polar modulation for 3G / HSxPA is more considered in a Small Signal Polar (SSP), for taking advantage of the polar modulation together with the constraints of severe timing and high dynamic output power control. In a preferred implementation of multi-band cellular transceiver, the IC is capable of working in SSP mode for 2G / 2.5 G mode of GSM, and in LSP mode for 3G/HSxUPA.

Some digital processing is needed within the Base Band part (BB), for generating the amplitude and frequency inputs signals. This signal generation takes into account the requirements of the standard regulation, the performances of transceiver benchmark, the current and area limits for a reasonable implementation. It also needs to be compatible with the capability of RF transmitter: Frequency Modulation (FM) on the VCO and amplitude modulation on the output buffer.

The inventors have observed that a polar architecture has a major drawback, especially in the case of QPSK (or HPSK, as well) modulation used in the UMTS standard. If the complex trajectory signal is passing through or at least close to the origin of the complex plane, the phase signal is changing very rapidly. This effect results in a huge PM (Phase Modulated) signal bandwidth which can not be handled properly by the subsequent stages due to the finite sampling frequency and finite FM range. This in turn leads to spectral broadening of the recombined signal (e.g. of the antenna signal). If the TX signal tail spectrum falls into the RX band an unwanted desensitization of the RX signal occurs (note: air signals are simultaneously transmitted and received in the UMTS standard).

According to an embodiment, a digital pre-processing block running directly in the I/Q-signal-domain is inserted in order to reduce the spectral broadening effect and the requirement for a huge FM signal range (leading to high or even impossible circuit requirements for the digital-to-analog conversion). A task of this pre-processing block is to bend the trajectory passing close to the origin so that an open eye in the complex plane comes into existence.

In order for this signal deformation not to significantly degrade the signal in terms of EVM (Error Vector Magnitude) and spectrum, an additional filter stage is preferably used to attenuate the thereby generated out-of band spectral re-growth.

According to another embodiment, it is proposed to modify the initial trajectory of the modulated signal, in order to limit the maximum FM deviation and magnitude dynamic range, together with keeping acceptable EVM, and frequency spectrum on adjacent channels for compliance with the standards.

According to an aspect, a method of processing a digital complex modulated signal is proposed, said method comprising performing pre-processing said digital complex modulated signal for obtaining a pre-processed digital complex modulated signal and performing a Cartesian to polar conversion of said pre-processed signal, said pre-processing including analysing the trajectory of said digital complex modulated signal and if said trajectory crosses a region around the origin of the complex plane, modifying said digital complex modulated signal such that said pre-processed signal has a modified trajectory avoiding said region.

Although many possibilities exist for avoiding said region, in a particular efficient embodiment, modifying said digital complex modulated signal comprises elaborating a complex correction signal and adding said complex correction signal to said digital complex modulated signal such that a part of said trajectory including the closest point of said trajectory is pushed away from said origin in a direction substantially orthogonal to said trajectory, thereby obtaining a modified digital complex signal.

According to an embodiment, elaborating said complex correction signal comprises estimating the amplitude and the phase of said complex correction signal at said closest point depending on the size of said region and the position of said closest point with respect to said origin and said adding step comprises adding said complex correction signal to said digital complex modulated signal at said closest point or in the vicinity of said closest point.

Several variants are possible for elaborating said complex correction signal.

According to a first variant, estimating the amplitude and the phase of said complex correction signal at said closest point comprises determining the sample of said complex modulated signal having the minimum amplitude, estimating an initial complex correction vector from a weighted interpolation between the two samples respectively preceding and following said sample having the minimum amplitude, determining a final complex correction vector parallel to said initial complex correction vector and having a magnitude depending on the size of said region and the magnitude of said initial complex correction vector, said final complex correction vector being said complex correction signal, and said adding step comprises adding said final complex correction vector to said sample having the minimum amplitude.

In other words, this variant is based on an easy interpolation of the sampling points for finding the minimum of the magnitude in Cartesian axis, then defining vector that is added to the signal, preferably in association with adequate filtering. An advantage is to avoid any heavy calculation of a high rate up-sampling before the detection of the minimum, as this detection may work at moderate sampling rate.

According to another variant, said digital complex modulated signal is sampled at a first frequency and estimating the amplitude and the phase of said complex correction signal at said closest point comprises up-sampling to a second frequency and interpolating said digital complex modulated signal, estimating said closest point from said up-sampled and interpolated complex signal, elaborating a correction complex pulse sampled at said second frequency and having an orientation and a magnitude depending on the size of said region and the position of said closest point with respect to said origin, and said adding step comprises outputting at said first frequency selected samples of said correction pulse, and adding said selected samples to samples of said digital complex modulated signal.

One of the advantages of such a pre-processing is the decreased requirements for the subsequent blocks, especially in the PM/FM path. The sampling rate and the signal bandwidth can be reduced without degrading the spectrum, i.e. the spectrum broadening is less influenced by the subsequent blocks. Although, this pre-processing produces itself some spectrum broadening, since the trajectory is bent around the origin of the complex plane as explained before, there is a possibility to apply afterwards a filtering in the I/Q domain.

As a consequence, the previously and undesirably generated spectrum broadening can be drastically reduced even without destroying the open eye in the complex plane.

According to another aspect, a device is proposed, having:

- input means configured for receiving a digital complex modulated signal,
- output means configured to deliver a pre-processed signal to Cartesian to polar conversion means, and
- pre-processing means, coupled between said input means and said output means, and including analysing means for analysing the trajectory of said digital complex modulated signal in a complex plane, controllable modification means configured for modifying said digital complex modulated signal such that said pre-processed signal has a modified trajectory avoiding a region around the origin of said complex plane, and control means configured for activating said modification means if said trajectory crosses said region.

According to an embodiment, said modification means are configured for elaborating a complex correction signal and adding said complex correction signal to said digital complex modulated signal such that a part of said trajectory including the closest point of said trajectory is pushed away from said origin in a direction substantially orthogonal to said trajectory.

According to an embodiment, said modification means comprises estimation means configured for estimating the amplitude and the phase of said complex correction signal at said closest point depending on the size of said region and the position of said closest point with respect to said origin and summation means configured for adding said complex correction signal to said digital complex modulated signal at said closest point or in the vicinity of said closest point.

According to a first variant, said estimation means comprises:

- first determination means configured for determining the sample of said complex modulated signal having the minimum amplitude,
- second determination means configured for estimating an initial complex correction vector from a weighted interpolation between the two samples respectively preceding and following said sample having the minimum amplitude,
- third determination means configured for determining a final complex correction vector parallel to said initial complex correction vector and having a magnitude depending on the size of said region and the magnitude of said initial complex correction vector, said final complex correction vector being said complex correction signal, and
- said summation means are configured for adding said final complex correction vector to said sample having the minimum amplitude.

According to another variant, said digital complex modulated signal is sampled at a first frequency and said estimation means comprises:

- first sub-processing means configured for up-sampling to a second frequency and interpolating said digital complex modulated signal,

- second sub-processing means configured for estimating said closest point from said up-sampled and interpolated complex signal,
- third sub-processing means configured for elaborating a correction complex pulse sampled at said second frequency and having an orientation and a magnitude depending on the size of said region and the position of said closest point with respect to said origin, and
- said summation means comprises delay means configured for delaying said digital complex modulated signal, outputting means configured for outputting selected samples of said correction pulse at said first frequency and adding means coupled to said outputting means and to said delay means.

In these two variants, all these means may be realized by software modules within a processor and/or by specific circuits including for example adders, multipliers, look-up tables, logic gates ...

Said pre-processing means may further comprise preferably filtering means coupled to the output of said modification means.

The device as defined above may be embedded in an integrated circuit.

According to another aspect, a polar modulation transmission chain is proposed, comprising modulation means configured for delivering a digital complex modulated signal, Cartesian to polar conversion means and a device as defined above, coupled between said modulation means and said Cartesian to polar conversion means.

According to another aspect, it is also proposed a communication apparatus, for example a wireless communication apparatus, including a polar modulation transmission chain as defined above.

Other advantages and features of the invention will appear on examining the detailed description of embodiments, these being in no way limiting, and of the appended drawings, in which:

- figures 1 to 6 illustrate diagrammatically flow charts of particular embodiments of a method according to the invention ;
- figures 7 to 13 illustrate diagrammatically particular embodiments of a device according to the invention ; and
- figures 14 to 17 illustrate some examples of results obtained with a transmitter according to the prior art and with particular embodiments of transmitters according to the invention.

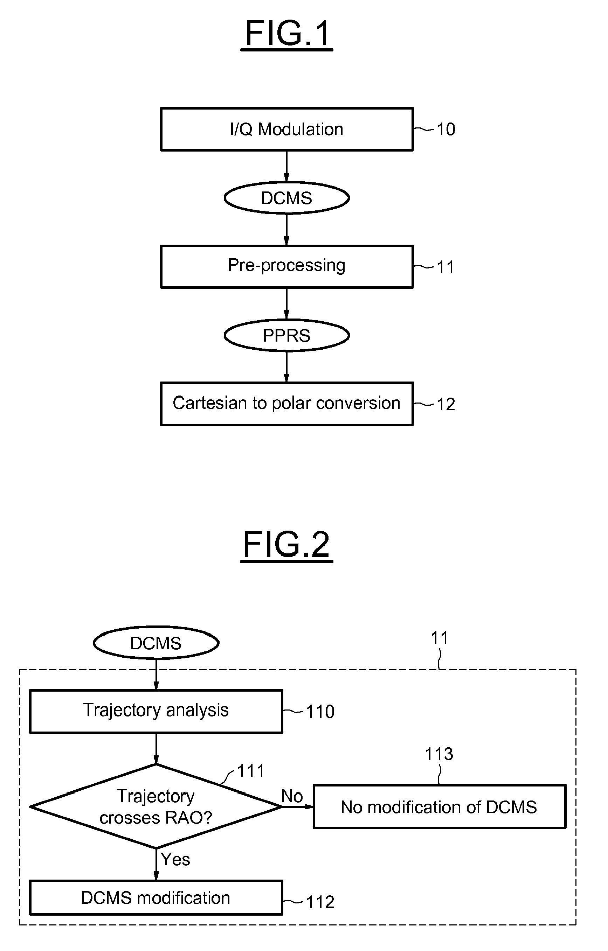

Turning now to figure 1, an I/Q modulation 10 provides a digital complex modulated signal DCMS. Preferably, at least in cellular 3G signals, the modulated signal DCMS is a signal having been already filtered for example with a well known RRC filter in UMTS applications. Said digital complex modulated signal DCMS is pre-processed (step 11) for providing a pre-processed signal PPRS. A conventional Cartesian to polar conversion 12 is then applied to the pre-processed signal PPRS.

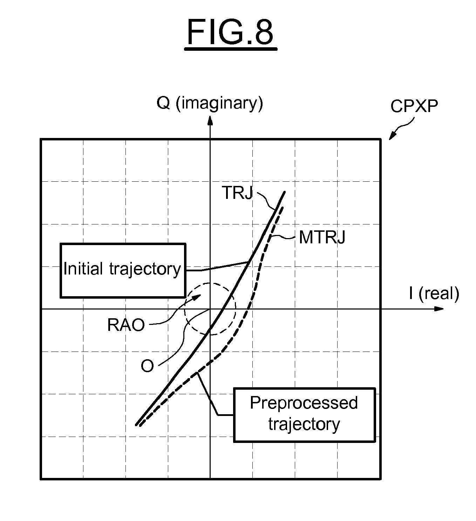

As illustrated more particularly on figure 2, the pre-processing step 11 includes an analysis 110 of the trajectory TRJ (figure 8, for example) of the digital complex modulated signal DCMS in the complex plane CPXP defined by the I axis and the Q axis.

And, this analysis comprises an analysis 111 of whether or not the trajectory TRJ of the signal DCMS crosses a region RAO around the origin O of the complex plane CPXP, leading thus in fast changing of phase theoretically resulting in very high peak of the FM signal.

If the trajectory does not cross the region RAO, no modification is performed on the signal DCMS (step 113).

Otherwise, the digital complex modulated signal DCMS is modified (step 112) such that said pre-processed signal PPRS has a modified trajectory MTRJ avoiding said region RAO, as illustrated for example in figure 8.

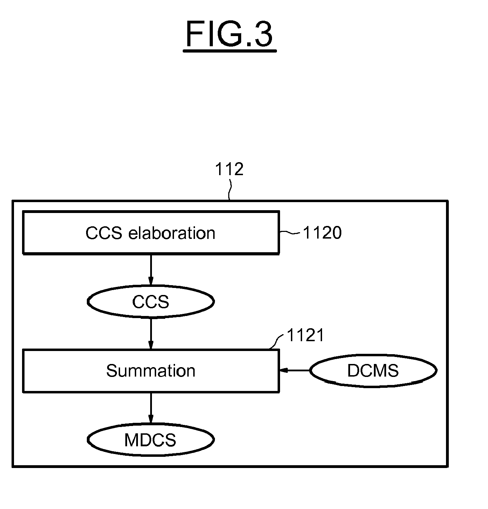

As illustrated diagrammatically in figure 3, modifying 112 said digital complex modulated signal DCMS comprises elaborating 1120 a complex correction signal CCS and adding said complex correction signal CCS to said digital complex modulation signal DCMS such that a part of said trajectory including the closest point of said trajectory with respect to the origin O is pushed away from said origin O in a direction substantially orthogonal to the trajectory TRJ, thereby obtaining a modified digital complex signal MDCS.

A solution for elaborating said complex correction signal CCS may comprise estimating the amplitude and the phase of the complex correction signal at said closest point depending on the size of the region RAO and the position of the closest point with respect to said origin O. Then, said complex correction signal CCS will be added to said digital complex modulated signal DCMS at said closest point (if said closest point corresponds actually to a sample of the signal) or, otherwise, in the vicinity of said closest point.

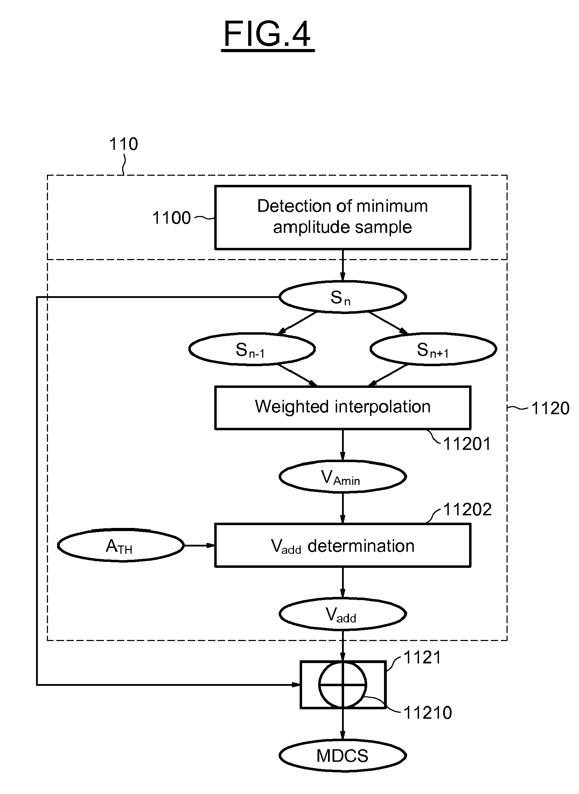

A first variant of the elaboration of the complex correction signal CCS as well as the summation of this signal CCS with the signal DCMS, is illustrated more particularly on figure 4.

In a first step (step #1), the sample having the minimum amplitude is detected (step 1100).

More precisely, each minimum is detected from the magnitude (amplitude) $A_i$ of the samples. A minimum is validated when two conditions are verified at the same time:

i) amplitude is less than a defined threshold $A_{TH}$,
ii) the amplitude $A_{n+1}$ of the next sample is larger than the amplitude $A_n$ of the current sample.

In fact, the threshold $A_{TH}$ corresponds to the size of the region RAO which has to be avoided by the trajectory.

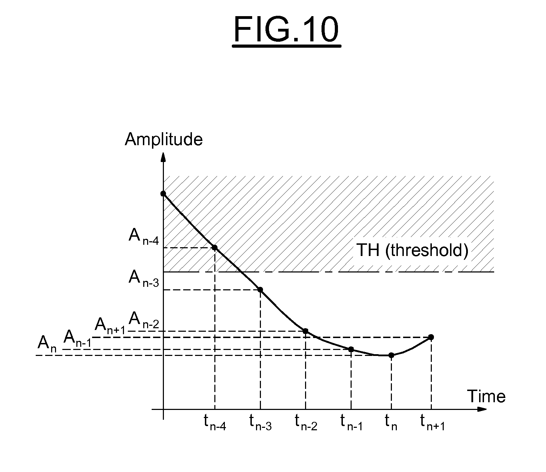

An example of the searching of the minimum is illustrated in figure 10. The first check (amplitude less than the threshold) is valid at time $t_{n-3}$ whereas the second one (the amplitude of the next sample is larger) is valid at time $t_n$ when the minimum of magnitude is detected. Accordingly, in this example, the sample $S_n$ is the sample having the minimum of amplitude $A_n$.

In a second step (step #2), the minimum magnitude point on the trajectory is calculated in order to push it away from the origin point O of the complex plane.

This minimum of the trajectory (closest point) can be absolutely different from any sample of the signal at the input, for example when the straight line between two samples is coming very close to the origin. The choice of the minimum amplitude of the input data should then not be the good one and forcing its magnitude to the threshold value $A_{TH}$ should add a vector roughly parallel to the trajectory TRJ, and the origin avoiding could be less efficient.

Accordingly, a weighted interpolation is performed between the input samples (step 11201; figure 4).

This operation done in a classical way is quite expensive in calculation (up-sampling with zero insertion, and filtering) leading to many multiplication and sum operations at each time step.

The solution is then to estimate the minimum vector in a one shot calculation as follow:

From the minimum amplitude point found previously $S_n$, take the previous sample $S_{n-1}$ and the following $S_{n+1}$, and calculate a sum weighted by the magnitude of $S_{n+1}$ and $S_{n-1}$ respectively.

The equation EQ1 of the trajectory vector at minimum in then:

$$V_{Amin} \; = \; (\; S_{n-1}* \; mag(S_{n+1}) \; + \; S_{n+1}* \; mag(S_{n-1})) \; / \; (\; mag(S_{n-1}) \; + \; mag(S_{n+1})) \qquad (EQ1)$$

A second optional estimation may be obtained by the formula:

$$V_{Amin}=(S_{n-1}*(|I_{n+1}|+|Q_{n+1}|)+S_{n+1}*(|I_{n-1}|+|Q_{n-1}|))/(|I_{n+1}|+|I_{n-1}|+|Q_{n-1}|+|Q_{n+1}|)$$

The third step 11202 (step #3) is to define a vector $V_{add}$ to be added to the trajectory for putting it away from the origin point. As a minimum amplitude vector is found ($VA_{min}$), that is perpendicular to the trajectory in the center area, a vector parallel to $VA_{min}$ having a magnitude of ($A_{th} - A_{Amin}$) will be added to the minimum point detected in step #1. Ath is the threshold and $A_{Amin}$ the magnitude of $V_{Amin}$. The equation of this vector is presented in polar coordinate:

$$Vadd = ((A_{th} - A_{Amin})/ \; A_{Amin}) \; * \; A_{Amin}* \; exp(j*\Phi_{Amin})$$

where $A_{Amin} * exp(j*\Phi_{Amin})$ is the polar expression of $V_{Amin}$, and $A_{th}$ is the magnitude of the threshold.

This can be expressed in equation EQ2 as:

$$V_{add} = K \; * \; V_{Amin}, \; with \; K = ((A_{th}/ \; A_{Amin}) \; -1) \qquad (EQ2)$$

In other words the minimum vector is multiplied by K to derive the vector Vadd to be added.

In this example, the vector $V_{add}$ is the complex correction signal CCS to be added (step 11210) to the signal DCMS (delayed by a delay corresponding to the processing delay occurring on the path from $S_n$ to the addition step 11210) for obtaining the modified signal MDCS.

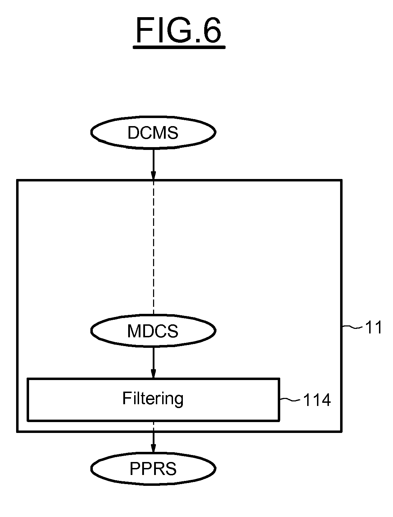

As illustrated more particularly in figure 6, at the end, the last step (step #4) of the pre-processing is preferably a filtering step 114. In the present variant, this last step 114 is for example an up-sampling by zero insertion and the associate filter ; its cut-off frequency is larger than that of the transmit channel filter requested by the communication standard, because this last one was already applied at the generation of the modulation signal and must not be disturbed by addition of parasitic response in amplitude and phase; anyway the cut-off can be increased compared to the modulator filter, as this second up-sampling occurs. Even if this filter does not have any action within the modulation bandwidth, it decreases the adjacent channel power due to the addition of zero avoiding vector to the minimum samples detected, and it may had some margin on transmitted noise far away from the carrier frequency.

The added vector is filtered together with the initial signal and distributed over several samples of the new sampling rate, such as the trajectory MTRJ avoids the origin in a time duration defined by the time response of the filter (see figure 8). When two consecutive minimum occur within a short time interval, two added vectors are passing the filtered simultaneously, because the time response of the filter is larger than this interval.

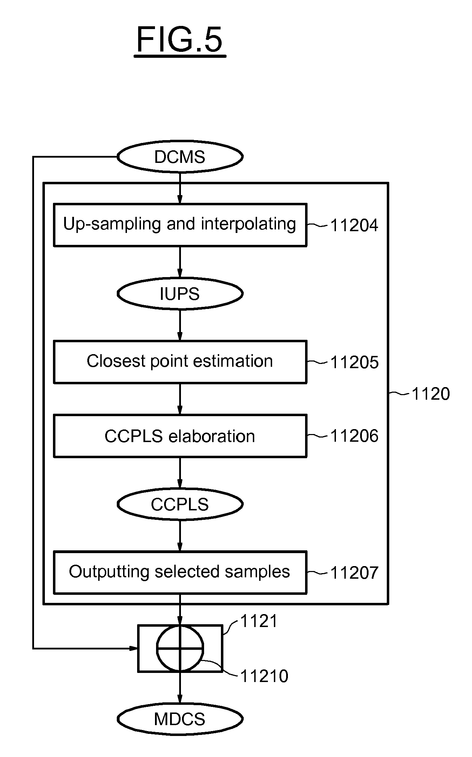

Another variant for elaborating the complex correction signal is illustrated more particularly in figure 5.

According to this variant, said digital complex modulated signal DCMS is sampled at a first frequency (for example a lower sampling frequency) and estimating the amplitude and the phase of a signal DCMS at said closest point comprises up-sampling the signal DCMS to a second frequency and interpolating said signal (step 11204) for obtaining an up-sampled and interpolated complex signal IUPS having a higher sampling frequency.

Then, the closest point is estimated (step 11205) from said signal IUPS.

Then, a correction complex pulse CCPLS sampled at said second frequency is elaborated (step 11206). Such pulse has an orientation and a magnitude depending on the size of the region RAO and the position of said closest point with respect to said origin.

Finally, selected samples of the correction pulse are output (step 11207) at said first frequency (forming thus the complex correction signal) and are added (step 11210) to samples of said digital complex modulated signal DCMS (delayed by a delay corresponding to the processing delay occurring on the path from step 11204 to the addition step 11210), for obtaining the modified complex digital signal MCDS.

Of course, as it will be explained more in details thereafter, if the trajectory does not cross the region around the origin, the correction pulse is not generated and the summation signal (from step 11207) is zero.

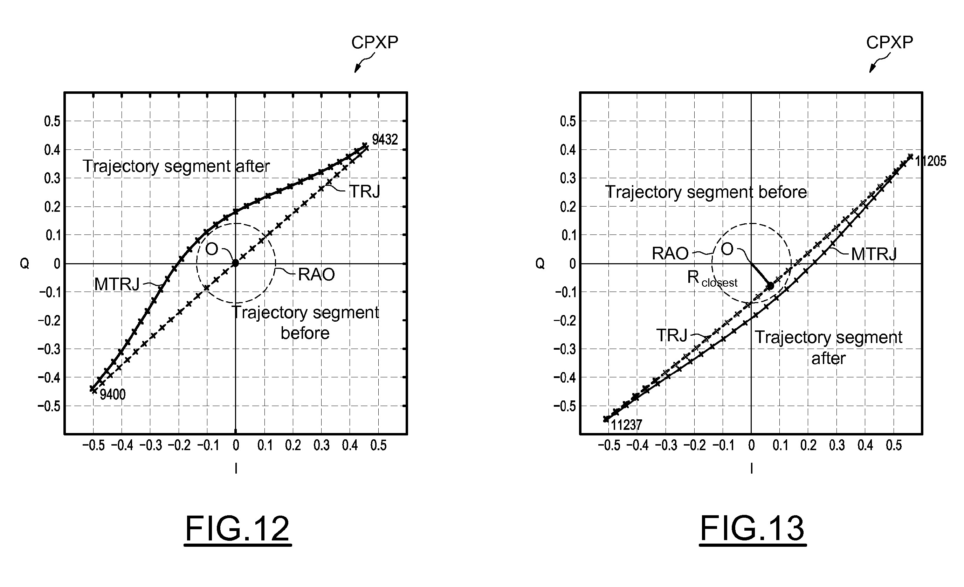

The step 11204 of up-sampling and interpolating allows the calculation of the minimum distance of the trajectory TRJ to the origin O of the complex plane CPXP (see, for example, figures 12 and 13), and the corresponding coordinates of the trajectory closest point, with a certain accuracy.

In step 11205 (closest point estimation), complex samples are firstly used to determine the samples which are the closest to the origin (local minima of the amplitude trajectory). Once such a sample is detected, a further linear interpolation may be applied to find the closest point of the trajectory, since in general, this closest point does not necessarily coincide with a sample point of the time-discrete digital signal. A linear interpolation is sufficient. The coordinate of this closest point provides the angle of the vertical line to the asymptote of the trajectory TRJ. Therefore, these coordinates can be directly used to define the direction of the complex pulse.

This pulse has in fact a direction orthogonal to the trajectory TRJ in order to push away efficiently the segment of said trajectory including in the middle the closest point of this trajectory TRJ outside of the region RAO (see figures 12 and 13, for example).

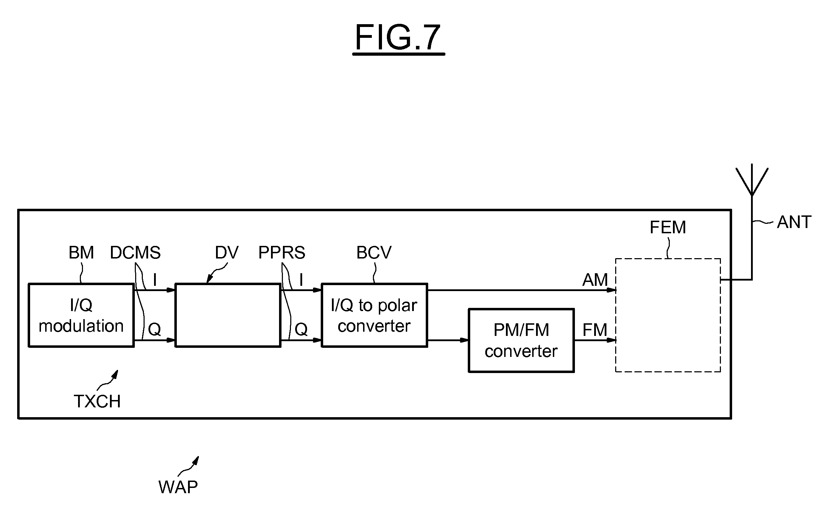

Further explanation and advantages of these two variants will be now explained more in details with reference to figures 7 and following.

In figure 7, the transmission chain TXCH of a wireless communication apparatus WAP, for example a mobile phone, is diagrammatically illustrated. This transmission chain TXCH has an architecture of the polar modulation type.

The modulated signal DCMS is generated in a conventional I/Q modulator according to the standard to be fulfilled. This I/Q modulator BM includes all the coding of the symbols, with the spreading and scrambling codes in CDMA/W-CDMA, for example. The constellation of the signal is generally filtered, usually by a root raised Cosine filter as in 3G standard. A device DV for pre-processing the signal DCMS is coupled to the output of the modulator BM.

This device DV is followed by a conventional block BCV performing a conventional I/Q to polar conversion, such as a well known CORDIC algorithm (CO-ordinate Rotation Digital Computer).

Then, the digital amplitude AM is delivered to a conventional front end module FEM.

The digital phase PM delivered by the converter BCV is converted in a frequency modulated signal FM which is also delivered to the front end module FEM.

The front end module FEM is coupled to the antenna ANT of the wireless communication apparatus WAP.

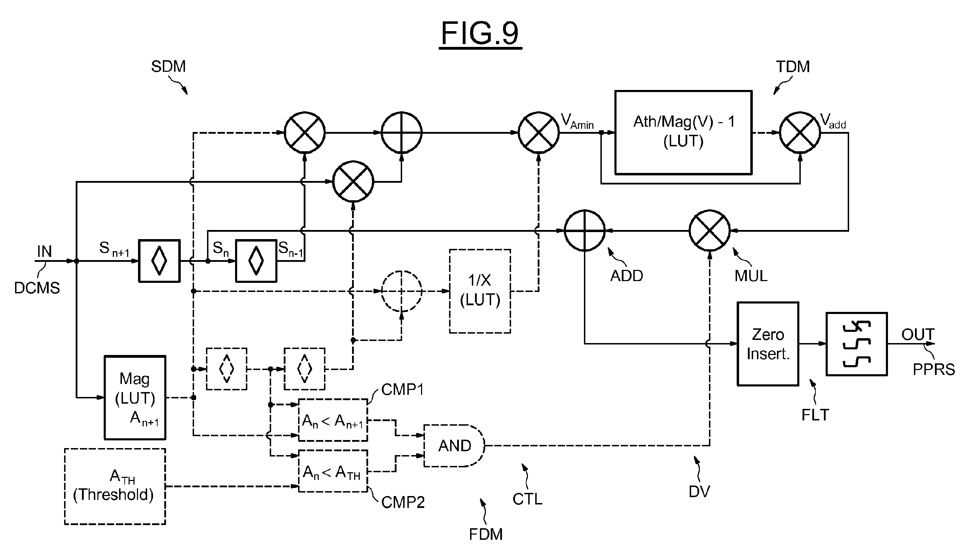

A first embodiment of the device DV is illustrated in figure 9 and corresponds to the first variant of the method according to the invention illustrated in particular in figure 4.

In figure 9, the solid lines correspond to complex data whereas the dashed lines correspond to real data.

First determination means FDM are configured for determining the sample $S_n$ having the minimum amplitude $A_n$.

More precisely, in this example, two comparators CMP1 and CMP2, compare respectively the amplitude $A_n$ of the current sample to the amplitude $A_{n+1}$ of the following sample, and the amplitude $A_n$ to the threshold $A_{TH}$.

Then, depending on the results of these two comparisons, an AND gate delivers a logical signal (0 or 1) to a first input of a multiplier MUL.

If the trajectory of the signal DCMS does not cross the region RAO, i.e. if the amplitude $A_n$ is greater than the threshold $A_{TH}$, said logical signal is equal to 0. In such a case, as explained more in details thereafter, the samples of the signal DCMS are only filtered before being delivered at the output OUT of device DV. But such a filtering does not modify the trajectory of the signal.

If the logical signal delivered by the AND gate is equal to 1, the signal DCMS is modified for avoiding the region RAO.

Thus, the second comparator CMP2 may be considered as belonging to analysis means configured for analysing the trajectory for determining whether or not this trajectory crosses the region RAO defined by the threshold $A_{TH}$.

And, the AND gate together with the multiplier MUL, may be considered as being control means CTL for activating or not the modification of the signal depending on whether or not the trajectory TRJ crosses the region RAO.

The two comparators CMP1 and CMP2 permit to detect the sample $S_n$ having the minimum amplitude $A_n$.

Second determination means SDM are configured for estimating the initial correction vector $V_{Amin}$ defined by the equation EQ1 mentioned above.

These second determination means SDM comprise here delay means as well as multipliers and adders and 1/X operator permitting to calculate the vector $V_{Amin}$.

For implementing this calculation a quite poor accuracy will be sufficient, for instance 6 bits computation. As the magnitude values are available from the step #1, the numerator requires only 2 multipliers and one adder. The denominator requires one adder for the sum of two magnitude, and then to realize the division; the low number of bits let possible to implement first the sum of the two magnitude, then a look-up table for the inversion 1/x and a multiplier.

The accuracy of the calculation does not need to be very high: in case two successive points at a minimum amplitude have almost the same value of amplitude, the detection of one sample or the other one has a negligible effect; furthermore when at least one coordinate I or Q is over the Amin the calculation of the effective magnitude is useless, because it will necessarily be over this value of threshold. In a typical implementation, the threshold is set at 0.15, the I and Q are limited to 0.25 (2 MSB's deleted), and are the input address of a look Up Table (LUT) to avoid calculation and current consumption. The preferred size are 32 x 32, namely a 5 bits resolution, or 64 x 64 , namely 6 bits, for the interval [0::0.25].

Despite the need of three magnitudes available at the same time for the complete process, only one LUT is implemented: the magnitudes of the two previous samples between kept in shift register with unit delays are always available.

Third determination means TDM are provided for determining the final complex correction vector $V_{add}$ which is parallel to the initial complex correction vector $V_{Amin}$ and which is given by the equation EQ2 mentioned above.

Once again, several methods are possible for these computations and in the present example, a look-up table LUT is used for this mathematical expression.

The complex correction vector $V_{add}$ is delivered to a second input of the multiplier MUL. If the logical signal delivered by the AND gate is equal to 1, the complex correction $V_{add}$ is thus delivered to summation means ADD provided for adding the final complex correction vector $V_{add}$ to the sample $S_n$ having the minimum amplitude.

Further, as explained above, filtering means FLT including up-sampling means by zero insertion and the associated low-pass filter, are preferably provided for decreasing the adjacent channel power due to the addition of the vector $V_{add}$.

If the logical signal delivered by the AND gate is equal to 0, the value 0 is delivered to the summation means ADD, and the samples of the signal DCMS are only filtered as explained above.

Thus, as explained above, this embodiment offers to find an effective minimum vector, roughly perpendicular to the trajectory TRJ.

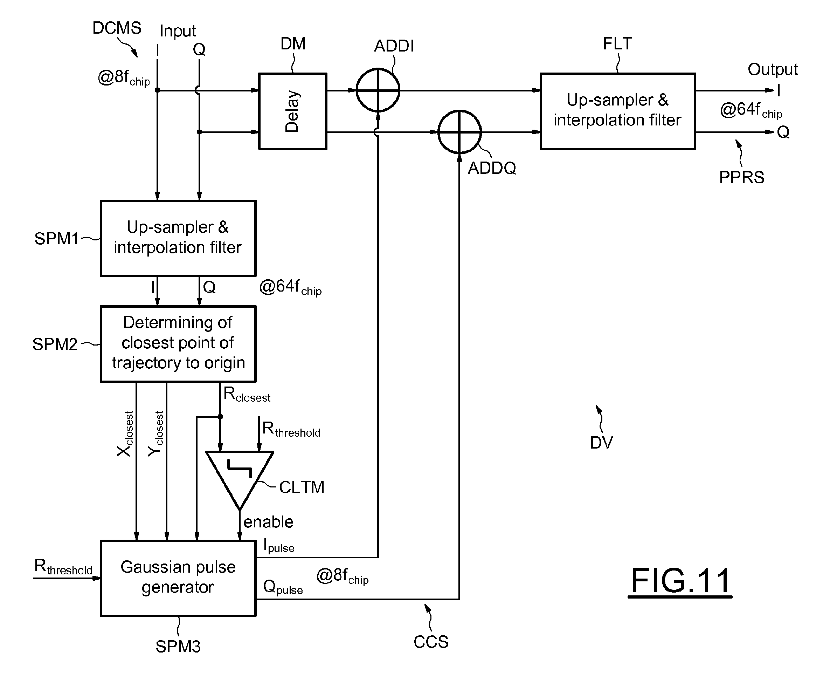

Another embodiment of a device DV, corresponding to the second variant of the invention illustrated in figure 5, is diagrammatically illustrated in figure 11.

As explained above, a purpose here is to insert small I&Q correction signals when required such that the origin crossings are avoided and an open eye results in the complex plane. If no correction is needed (i.e. the local minimum of the amplitude $R_{closest}$ is larger than the comparison amplitude $R_{threshold}$) then no pulse is generated (i.e. $I_{pulse}(t)+jQ_{pulse}(t)=0$) and the trajectory is not modified, except preferably of up-sampling and interpolation performed in filtering means FLT.

The I/Q pre-processing block is fed by the modulator. The trajectory signal $Z(t)=I(t)+jQ(t)$ is up-sampled (from the first frequency $8f_{chip}$ to the second frequency $64f_{chip}$) and interpolated in first sub-processing means SPM1. The resulting trajectory signal is permanently observed and analysed and if it crosses the region around the origin (i.e. abs $(Z)<R_{threshold}$) a correction pulse is generated and added to the original signal. The pulse assumed in this example has a Gaussian shape, whereas the peak value of the pulse is the larger the closer the trajectory passes the origin. The two-dimensional pulse has also a direction showing vertically to the trajectory. This is the reason why the pulse generator SPM3 not only needs the $R_{closest}$ information (including the exact time stamp) from the trajectory, but also the coordinates $x_{closest}$, $y_{closest}$ of the closest point of the trajectory. Since in general this closest point does not necessarily coincide with a sample point (@64$f_{chip}$) of the time-discrete digital signal a further interpolation is needed. It could be shown that a linear interpolation (assuming the trajectory is already sampled with a high-speed clock @64$f_{chip}$) is sufficient.

This interpolation is made in a classic way in second sub-processing means SPM2.

In figures 12 and 13, two different examples for bending the trajectory are shown.

In figure 12, the original signal practically crosses the origin of the plane and therefore the correction pulse has the largest peak value (corresponding to $R_{threshold}$). In such a case the modified trajectory (after pre-processing) contains the highest deviation from the original curve leading to an additional EVM (Error Vector Magnitude) contribution. The comparison number $R_{threshold}$ (also defining approximately the size of the open eye) has to be defined such that the EVM enlargement can be tolerated.

In figure 13 the original trajectory passes the origin with a certain (but small) distance. The minimum distance is given by the vertical (referred to the asymptote of the trajectory) line with the length $R_{closest}$. The correction pulse needed here is smaller, i.e. the peak value is given by $R_{threshold}$-$R_{closest}$. Therefore, the modified trajectory deviates less from the original trajectory compared to the previous example illustrated in figure 12.

A comparator CLTM permits to analyse permanently the trajectory and to detect whether or not this trajectory crosses the region RAO around the origin.

More precisely, the enable signal is activated in the case where the distance of the closest point to the origin ($R_{closest}$) is lower than a certain threshold ($R_{threshold}$). This comparator forms here control means to activate or not the modifying means configured to modify of the signal DCMS.

The correction pulses are generated in a pulse generator SPM3.

Pulses are only generated if the enable input signal is activated. The enable signal could be used to trigger the pulse generator. The scaling of the pulse is given by the difference of $R_{closest}$ and $R_{threshold}$. The orientation of the complex pulse is defined by the angle of the closest point.

The Gaussian pulse applied in this example has a length of 33 taps assuming a first sampling frequency of 64$f_{chip}$. Since the output is provided at a second sampling frequency of 8$f_{chip}$ the number of output samples is reduced to 4 to 5. Dependent on the location (in the signal sequence) of the sample with the closest distance to the origin the corresponding samples of the Gaussian pulse are selected (e.g. [3], [11], [19], [27] or [1], [9], [17], [25], [33]).

The selected samples of the correction pulse, forming the correction complex signal CCS, are added in adding mans AddI and AddQ with the signal DCMS delayed in delay block DM.

As a matter of fact, this delay block delays the input signal DCMS in order to compensate the time needed to detect the close-to-origin transitions and the corresponding correction pulse generation in the parallel path.

The time alignment between both path is set with an accuracy of $1/(64f_{chip})$.

A final stage in the device DV is here the filtering means FLT carries out up-sampling of the signal and reduction of the out-of-band spectrum without destroying the open eye in the complex plane.

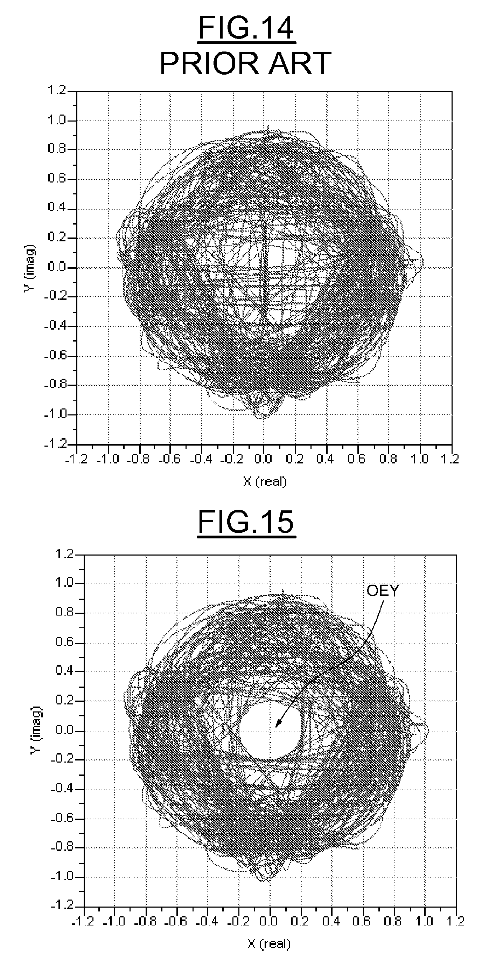

Non limitative examples of advantages of a pre-processing according to the invention with respect to the prior art (i.e without pre-processing), whatever the variant used, are now illustrated on Figures 14-17.

Figure 14 presents the modulation release 99 (R99) of a 3G transmit, where some critical points (close-to-origin transitions) can be observed.

Figure 15 presents the modified trajectory and frequency spectrum of output signal on 3G-release 99.

In this figure 15, the open eye OEY resulting from the pre-processing, is clearly observable.

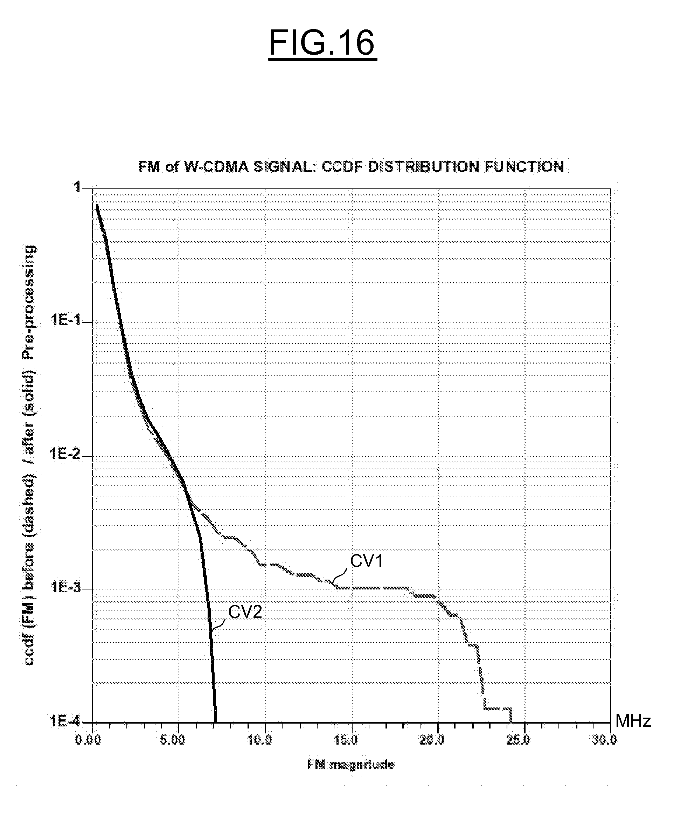

The result of close-to-origin transitions is in particular a high maximum FM (Frequency modulation) deviation as illustrated in particular by curve CV1 of figure 16. More precisely on this figure measures have been made with an input W-CDMA signal at 61,44 Msamples/s. And the curve CV1 ( Complementary Cumulative Distribution Function of FM ) shows a FM magnitude having values greater than 20 MHz.

The effect of the proposed digital pre-processing appears very clear on curve CV2 of figure 16 as a limitation of FM magnitude at 7.5 MHz after pre-processing. In this example the pre-processed signal at the end of the filtering is at 245,8 Msamples/s, that is at 122,9 MHz at max FM.

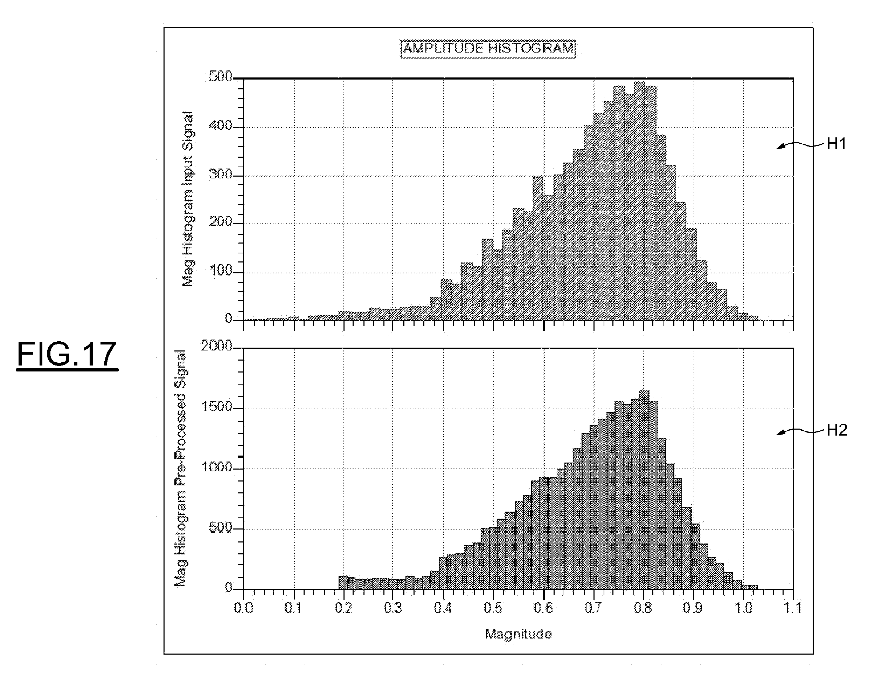

Figure 17 shows the amplitude histogram H1 (amplitude distribution function (not cumulative)) of the W-CDMA signal before pre-processing, and the amplitude histogram H2 of the pre-processed signal. The histogram H2 shows in particular no samples having a magnitude below 0,2.

A benefit of the proposed pre-processing is to have the polar modulation transmission possible with RF communication systems that do not avoid the origin by the definition of their standard. A non exhaustive list of such standards are: Blue Tooth, WLAN, 3G release 99, 3G HSxPA.

**Claims**

1.  Method of processing a digital complex modulated signal, comprising performing pre-processing said digital complex modulated signal (DCMS) for obtaining a pre-processed digital complex modulated signal (PPRS) and performing a Cartesian to polar conversion of said pre-processed signal, said pre-processing (11) including analysing the trajectory of said digital complex modulated signal and if said trajectory crosses a region (RAO) around the origin (O) of the complex plane, modifying (112) said digital complex modulated signal such that said pre-processed signal has a modified trajectory avoiding said region.

2.  Method according to claim 1, wherein modifying said digital complex modulated signal comprises elaborating (1120) a complex correction signal (CCS) and adding (1121) said complex correction signal to said digital complex modulated signal such that a part of said trajectory including the closest point of said trajectory with respect to said origin is pushed away from said origin in a direction substantially orthogonal to said trajectory, thereby obtaining a modified digital complex signal.

3.  Method according to claim 2, wherein elaborating said complex correction signal (CCS) comprises estimating the amplitude and the phase of said complex correction signal at said closest point depending on the size of said region and the position of said closest point with respect to said origin and said adding step comprises adding said complex correction signal to said digital complex modulated signal at said closest point or in the vicinity of said closest point.

4.  Method according to claim 3, wherein estimating the amplitude and the phase of said complex correction signal at said closest point comprises determining (1100) the sample of said complex modulated signal having the minimum amplitude, estimating (11201) an initial complex correction vector ($V_{Amin}$) from a weighted interpolation between the two samples respectively preceding and following said sample having the minimum amplitude, determining (11202) a final complex correction vector ($V_{add}$) parallel to said initial complex correction vector and having a magnitude depending on the size of said region and the magnitude of said initial complex correction vector, said final complex correction vector being said complex correction signal, and said adding step comprises adding (11210) said final complex correction vector to said sample having the minimum amplitude.

5.  Method according to claim 3, wherein said digital complex modulated signal is sampled at a first frequency and estimating the amplitude and the phase of said complex correction signal at said closest point comprises up-sampling to a second frequency and interpolating (11204) said digital complex modulated signal, estimating (11205) said closest point from said up-sampled and interpolated complex signal, elaborating (11206) a correction complex pulse sampled at said second frequency and having an orientation and a magnitude depending on the size of said region and the position of said closest point with respect to said origin, and said adding step comprises outputting (11207) at said first frequency selected samples of said correction pulse, and adding (11210) said selected samples to samples of said digital complex modulated signal.

6.  Method according to any one of the claims 2 to 5, wherein said pre-processing (11) further comprises filtering (114) said modified digital complex signal.

7.  Device, having input means configured for receiving a digital complex modulated signal (DCMS), output means configured to deliver a pre-processed signal (PPRS) to Cartesian to polar conversion means, and pre-processing means coupled between said input means and said output means and including analysing means for analysing the trajectory of said digital complex modulated signal in a complex plane, controllable modification means configured for modifying said digital complex modulated signal such that said pre-processed signal has a modified trajectory avoiding a region (RAO) around the origin of said complex plane, and control means configured for activating said modification means if said trajectory crosses said region.

8.  Device according to claim 7, wherein said modification means are configured for elaborating a complex correction signal (CCS) and adding said complex correction signal to said digital complex modulated signal such that a part of said trajectory including the closest point of said trajectory with respect to said origin is pushed away from said origin in a direction substantially orthogonal to said trajectory.

9.  Device according to claim 8, wherein said modification means comprises estimation means configured for estimating the amplitude and the phase of said complex correction signal (CCS) at said closest point depending on the size of said region and the position of said closest point with respect to said origin and summation means configured for adding said complex correction signal to said digital complex modulated signal at said closest point or in the vicinity of said closest point.

10. Device according to claim 9, wherein said estimation means comprises first determination means (FDM) configured for determining the sample of said complex modulated signal having the minimum amplitude, second determination means (SDM) configured for estimating an initial complex correction vector from a weighted interpolation between the two samples respectively preceding and following said sample having the minimum amplitude, third determination means (TDM) configured for determining a final complex correction vector parallel to said initial complex correction vector and having a magnitude depending on the size of said region and the magnitude of said initial complex correction vector, said final complex correction vector being said complex correction signal, and said summation means (ADD) are configured for adding said final complex correction vector to said sample having the minimum amplitude.

11. Device according to claim 9, wherein said digital complex modulated signal is sampled at a first frequency and said estimation means comprises first sub-processing means (SPM1) configured for up-sampling to a second frequency and interpolating said digital complex modulated signal, second sub-processing means (SPM2) configured for estimating said closest point from said up-sampled and interpolated complex signal, third sub-processing means (SPM3) configured for elaborating a correction complex pulse sampled at said second frequency and having an orientation and a magnitude depending on the size of said region and the position of said closest point with respect to said origin, and said summation means comprises delay means (DM) configured for delaying said digital complex modulated signal, outputting means configured for outputting selected samples of said correction pulse at said first frequency and adding means (ADD) coupled to said outputting means and to said delay means.

12. Device according to any one of claims 7 to 11, wherein said pre-processing means further comprises filtering means (FLT) coupled to the output of said modification means.

13. Device according to any one of claims 7 to 12, embedded in an integrated circuit

14. Polar modulation transmission chain, comprising modulation means (BM) configured for delivering a digital complex modulated signal, Cartesian to polar conversion means (BCV) and a device (DV) according to any one of claims 7 to 13, coupled between said modulation means and said Cartesian to polar conversion means.

15. Communication apparatus, including a polar modulation transmission chain (TXCH) according to claim 14.

16. Communication apparatus according to claim 15, being a wireless communication apparatus (WAP).

## FIG.1

```
┌─────────────────────┐
│   I/Q Modulation    │──10
└─────────────────────┘
          │
          ▼
      ( DCMS )
          │
          ▼
┌─────────────────────┐
│   Pre-processing    │──11
└─────────────────────┘
          │
          ▼
      ( PPRS )
          │
          ▼
┌──────────────────────────────┐
│ Cartesian to polar conversion │──12
└──────────────────────────────┘
```

## FIG.2

# FIG.3

# FIG.4

# FIG.5

```
                    ( DCMS )
   ┌──────────────────│────────────────────┐
   │  ┌─────────────────────────────────┐  │
   │  │  Up-sampling and interpolating  │──11204
   │  └─────────────────────────────────┘  │
   │                  │                     │
   │               ( IUPS )                 │
   │                  │                     │
   │  ┌─────────────────────────────────┐  │
   │  │    Closest point estimation     │──11205
   │  └─────────────────────────────────┘  │    ──1120
   │                  │                     │
   │  ┌─────────────────────────────────┐  │
   │  │        CCPLS elaboration        │──11206
   │  └─────────────────────────────────┘  │
   │                  │                     │
   │              ( CCPLS )                 │
   │                  │                     │
   │  ┌─────────────────────────────────┐  │
   │  │   Outputting selected samples   │──11207
   │  └─────────────────────────────────┘  │
   └──────────────────│────────────────────┘
                      │        ──1121
              ┌──────⊕──────┐
              └─────────────┘──11210
                      │
                  ( MDCS )
```

# FIG.6

```
        ┌─────────┐
        │  DCMS   │
        └─────────┘
             │
             ▼
  ┌──────────────────────────────┐
  │          ┊                    │
  │          ┊                    │
  │          ┊                    │
  │          ▼                    │      ～11
  │     ┌─────────┐               │
  │     │  MDCS   │               │
  │     └─────────┘               │
  │          │                    │
  │          ▼                    │
  │  ┌──────────────────┐         │
  │  │    Filtering     │ ～114    │
  │  └──────────────────┘         │
  └──────────────────────────────┘
             │
             ▼
        ┌─────────┐
        │  PPRS   │
        └─────────┘
```

EP 2 242 227 A1

# FIG.7

# FIG.8

FIG.9

# FIG.10

FIG.11

EP 2 242 227 A1

CPXP

Q

0.5
0.4 ⟍9432
Trajectory segment after
0.3
0.2                    TRJ
0.1
0    MTRJ     O
-0.1              RAO
-0.2        Trajectory segment
-0.3              before
-0.4
9400 -0.5

-0.5 -0.4 -0.3 -0.2 -0.1 0 0.1 0.2 0.3 0.4 0.5

I

FIG.12

CPXP

Q

0.5
0.4 ⟍11205
0.3
Trajectory segment before
0.2
0.1
0    RAO   O        MTRJ
-0.1  R$_{closest}$
-0.2
TRJ      Trajectory segment
-0.3              after
-0.4
-0.5
11237

-0.5 -0.4 -0.3 -0.2 -0.1 0 0.1 0.2 0.3 0.4 0.5

I

FIG.13

# FIG.14
# PRIOR ART

# FIG.15

# FIG.16

FM of W-CDMA SIGNAL: CCDF DISTRIBUTION FUNCTION

FIG.17

Europäisches
Patentamt

European
Patent Office

Office européen
des brevets

# EUROPEAN SEARCH REPORT

**Application Number**

EP 09 15 7946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/198414 A1 (HUNTON MATTHEW J [US]) 7 October 2004 (2004-10-07) <br><br> * abstract * <br> * paragraph [0008] * <br> * paragraph [0015] * <br> * paragraph [0039] * <br> * paragraph [0043] - paragraph [0051] * <br> * figures 4-6,8 * | 1-4, 6-10, 12-16 | INV. <br> H04L27/34 <br> H04L27/36 |
| Y | | 5,11 | |
| | ----- | | |
| X | US 2008/045163 A1 (STRANDBERG RICHARD H [US] ET AL) 21 February 2008 (2008-02-21) <br><br> * abstract * <br> * paragraph [0017] * <br> * paragraph [0034] * <br> * figures 3,4,6-12 * | 1-4, 6-10, 12-16 | |
| Y | | 5,11 | |
| | ----- | | |
| X | WO 03/010914 A (DSPC TECH LTD [IL]) 6 February 2003 (2003-02-06) <br><br> * abstract * <br> * claim 1 * <br> * page 1, line 7 - line 8 * <br> * page 3, line 7 - line 15 * <br> * page 5, line 17 - page 6, line 6 * <br> * page 10, line 9 - page 11, line 26 * <br> * figure 2 * | 1-4, 6-10, 12-16 | TECHNICAL FIELDS SEARCHED (IPC) <br><br> H04L <br> H04B |
| Y | | 5,11 | |
| | ----- | | |
| | -/-- | | |

The present search report has been drawn up for all claims

| Place of search | Date of completion of the search | Examiner |
|---|---|---|
| Munich | 30 July 2009 | Murcia Martinez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EUROPEAN SEARCH REPORT**

Application Number

EP 09 15 7946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 696 794 A (O'DEA ROBERT J [US]) 9 December 1997 (1997-12-09) <br><br> * abstract * <br> * column 3, line 52 - line 60 * <br> * column 4, line 14 - line 27 * <br> * figure 5 * | 1-4, 6-10, 12-16 | |
| Y | | 5,11 | |
| Y | WO 03/081870 A (CANADA MAJESTY IN RIGHT OF [CA]; HUANG XINPING [CA]; CARON MARIO [CA]) 2 October 2003 (2003-10-02) <br> * paragraph [0080] * | 5,11 | |
| Y | US 2009/072921 A1 (SCHMID ANDREAS [DE]) 19 March 2009 (2009-03-19) <br> * paragraph [0041] * | 5,11 | |

TECHNICAL FIELDS
SEARCHED (IPC)

The present search report has been drawn up for all claims

| Place of search | Date of completion of the search | Examiner |
|---|---|---|
| Munich | 30 July 2009 | Murcia Martinez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 15 7946

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2009

| Patent document cited in search report | | Publication date | Patent family member(s) | | Publication date |
|---|---|---|---|---|---|
| US 2004198414 | A1 | 07-10-2004 | NONE | | |
| US 2008045163 | A1 | 21-02-2008 | NONE | | |
| WO 03010914 | A | 06-02-2003 | AU | 2002321788 A1 | 17-02-2003 |
| | | | US | 2003021357 A1 | 30-01-2003 |
| US 5696794 | A | 09-12-1997 | DE | 19781681 C2 | 14-11-2002 |
| | | | DE | 19781681 T0 | 25-03-1999 |
| | | | KR | 20000005267 A | 25-01-2000 |
| | | | WO | 9738506 A1 | 16-10-1997 |
| WO 03081870 | A | 02-10-2003 | AU | 2003213930 A1 | 08-10-2003 |
| | | | CA | 2457404 A1 | 02-10-2003 |
| | | | EP | 1402700 A1 | 31-03-2004 |
| US 2009072921 | A1 | 19-03-2009 | CN | 101388878 A | 18-03-2009 |
| | | | DE | 102008046832 A1 | 02-04-2009 |

EPO FORM P0459

For more details about this annex : see Official Journal of the European Patent Office, No. 12/82